(19) Europäisches Patentamt
European Patent Office
Office européen des brevets

(11) EP 4 130 012 A1

(12) **EUROPEAN PATENT APPLICATION**
published in accordance with Art. 153(4) EPC

(43) Date of publication:
**08.02.2023 Bulletin 2023/06**

(21) Application number: **21774502.5**

(22) Date of filing: **24.02.2021**

(51) International Patent Classification (IPC):
***C07F 7/00*** (1968.09) ***B01D 61/36*** (1990.01)
***B01D 71/06*** (1990.01) ***B01D 71/64*** (1990.01)

(52) Cooperative Patent Classification (CPC):
**B01D 61/36; B01D 71/06; B01D 71/64; C07F 7/00**

(86) International application number:
**PCT/JP2021/006895**

(87) International publication number:
**WO 2021/192791 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2020 JP 2020054139**

(71) Applicant: **NITTO DENKO CORPORATION**
**Ibaraki-shi**
**Osaka 567-8680 (JP)**

(72) Inventors:
- **KATAGIRI Makoto**
  **Ibaraki-shi, Osaka 567-8680 (JP)**
- **NISHIYAMA Shinya**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **METAL-ORGANIC FRAMEWORK, SEPARATION FILM, AND METHOD FOR PRODUCING METAL-ORGANIC FRAMEWORK**

(57) The present invention provides a metal organic framework suitable for increasing a flux of a permeation fluid permeating through a separation membrane. The metal organic framework of the present invention includes a metal ion and an organic ligand. The organic ligand includes, besides a functional group to be coordinated with the metal ion, a first functional group and a second functional group different from the first functional group. The second functional group is a hydroxy group, a nitro group, or a carboxyl group. A ratio of the number of moles of the second functional group with respect to a total value of the number of moles of the first functional group and the number of moles of the second functional group is 30 mol% or less.

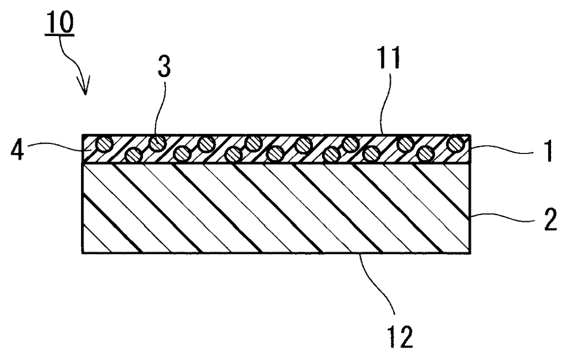


FIG.1

EP 4 130 012 A1

## Description

### TECHNICAL FIELD

The present invention relates to a metal organic framework, a separation membrane, and a method for producing a metal organic framework.

### BACKGROUND ART

A metal organic framework (MOF) has a structure that can take a low-molecular compound into itself and is used for various applications such as a catalyst, a drug, and a cosmetic. The metal organic framework is also referred to as a porous coordination polymer (PCP) in some cases.

The metal organic framework is usually formed of a metal ion and an organic ligand. The organic ligand includes a functional group to be coordinated with the metal ion, and is coordinated with the metal ion by the functional group. A conventional metal organic framework is disclosed in Patent Literature 1, for example.

### CITATION LIST

#### Patent Literature

Patent Literature 1: JP 2011-501739 A

### SUMMARY OF INVENTION

#### Technical Problem

As a result of intensive studies, the present inventors have newly found that an addition of a metal organic framework to a separation membrane changes a flux of a permeation fluid permeating through the separation membrane.

Therefore, the present invention is intended to provide a metal organic framework suitable for increasing a flux of a permeation fluid permeating through a separation membrane.

#### Solution to Problem

The present invention provides a metal organic framework including a metal ion and an organic ligand, wherein

the organic ligand includes, besides a functional group to be coordinated with the metal ion, a first functional group and a second functional group different from the first functional group,
the second functional group is a hydroxy group, a nitro group, or a carboxyl group, and
a ratio of the number of moles of the second functional group with respect to a total value of the number of moles of the first functional group and the number of moles of the second functional group is 30 mol% or less.

The present invention further provides a method for producing the above-mentioned metal organic framework, including
allowing a precursor of the metal organic framework including the metal ion and a first organic ligand including the first functional group to be in contact with a second organic ligand including the second functional group.

The present invention further provides a method for producing a metal organic framework, wherein

the metal organic framework includes a metal ion and an organic ligand,
the organic ligand includes, besides a functional group to be coordinated with the metal ion, a first functional group and a second functional group different from the first functional group, and
the second functional group is a hydroxy group, a nitro group, or a carboxyl group,
the method including
allowing a precursor of the metal organic framework including the metal ion and a first organic ligand including the first functional group to be in contact with a second organic ligand including the second functional group at a temperature of 40°C or higher and for a duration of 5 minutes or less.

Advantageous Effects of Invention

The present invention can provide a metal organic framework suitable for increasing a flux of a permeation fluid permeating through a separation membrane.

BRIEF DESCRIPTION OF DRAWINGS

FIG. 1 is a cross-sectional view illustrating schematically a separation membrane according one embodiment of the present invention.
FIG. 2 is a schematic cross-sectional view of a membrane separation device provided with the separation membrane of the present invention.
FIG. 3 is a perspective view illustrating schematically a modification of the membrane separation device provided with the separation membrane of the present invention.

DESCRIPTION OF EMBODIMENTS

According to one embodiment of the present invention, the organic ligand includes a first organic ligand including the first functional group and a second organic ligand including the second functional group.
According to one embodiment of the present invention, the first functional group is an amino group.
According to one embodiment of the present invention, the organic ligand includes a dicarboxylic acid derivative.
According to one embodiment of the present invention, the organic ligand includes a terephthalic acid derivative.
According to one embodiment of the present invention, the metal ion includes zirconium.
According to one embodiment of the present invention, a zeta potential of the metal organic framework in N,N-dimethylformamide is a negative value.
According to one embodiment of the present invention, a separation membrane includes the above-mentioned metal organic framework.
According to one embodiment of the present invention, the separation membrane is provided with a separation functional layer including a matrix and the metal organic framework dispersed in the matrix.
According to one embodiment of the present invention, the above-mentioned matrix contains polyimide.
According to one embodiment of the present invention, the above-mentioned polyimide includes a structural unit represented by formula (1) below:

[Chemical Formula 1]

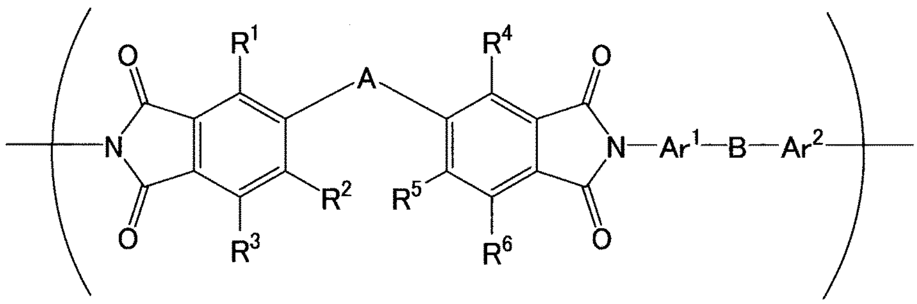

(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxy group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

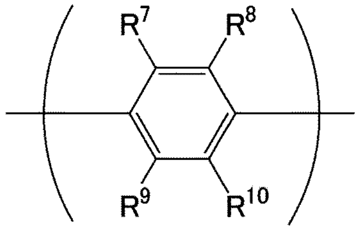

(2)

where $R^7$ to $R^{10}$ each are independently a hydrogen atom, a halogen atom, a hydroxy group, a sulfonic group, an alkoxy group having 1 to 30 carbon atoms, or a hydrocarbon group having 1 to 30 carbon atoms.

According to one embodiment of the present invention, a content of the metal organic framework in the separation functional layer is 10 wt% or less.

According to one embodiment of the present invention, the separation membrane is used for separating water from a liquid mixture containing an alcohol and water.

Hereinafter, the present invention will be described in detail. The following description is not intended to limit the present invention to a specific embodiment.

(Embodiment of metal organic framework)

A metal organic framework S of the present embodiment includes a metal ion and an organic ligand. The organic ligand includes, besides a functional group to be coordinated with the metal ion, a first functional group and a second functional group different from the first functional group. As mentioned below, the metal organic framework S can be added to a separation membrane and used.

The first functional group is, for example, a functional group with high affinity for a permeation fluid permeating through a separation membrane. For example, in the case where the separation membrane is used for separating water from a liquid mixture containing an alcohol and water, it is preferable that the first functional group be a polar group, particularly a hydrophilic group, other than the second functional group. A specific example of the first functional group is an amino group (particularly a primary amino group). The metal organic framework S provided with the organic ligand including the amino group tends to have an excellent durability.

The second functional group is a hydroxy group, a nitro group, or a carboxyl group, and it is preferably a carboxyl group. The second functional group tends to enhance the dispersibility of the metal organic framework S inside a separation membrane, particularly a separation membrane containing polyimide.

In the present embodiment, a ratio P1 of the number of moles of the second functional group with respect to a total value of the number of moles of the first functional group and the number of moles of the second functional group is 30 mol% or less, and it is preferably 25 mol% or less, more preferably 20 mol% or less, and still more preferably 15 mol% or less. The ratio P1 is preferably 1 mol% or more, and more preferably 3 mol% or more.

The functional group to be coordinated with the metal ion is not particularly limited, and it is a carboxyl group, for example. The organic ligand may include two carboxyl groups each as the functional group to be coordinated with the metal ion. That is, the organic ligand may include a dicarboxylic acid derivative including the first functional group and the second functional group, or may include a terephthalic acid derivative including the first functional group and the second functional group. The metal ion is not particularly limited. The metal ion includes a transition metal, for example, and preferably it includes zirconium.

The organic ligand may include a first organic ligand including the first functional group and a second organic ligand including the second functional group. Specifically, the first organic ligand is a hydrocarbon compound including the first functional group and the functional group to be coordinated with the metal ion. Preferably, the first organic ligand is a dicarboxylic acid derivative including the first functional group. The number of carbon atoms that the first organic ligand has is not particularly limited, and it is 3 to 25, for example, and it is preferably 3 to 10. The first organic ligand may include an aromatic ring. It is preferable that, in the first organic ligand, the aromatic ring be composed of a carbon atom. It should be noted that the aromatic ring may be a heteroaromatic ring including a hetero atom such as an oxygen atom, a nitrogen atom, and a sulfur atom. The aromatic ring may be polycyclic, but preferably it is monocyclic. The aromatic ring is a benzene ring, for example.

Preferably, the first organic ligand is a terephthalic acid derivative including the first functional group. The first organic ligand as just mentioned is represented by formula (6) below, for example. In the formula (6), X is the first functional group.

[Chemical Formula 3]

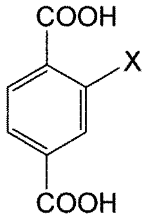

(6)

A specific example of the first organic ligand is 2-aminoterephthalic acid.

Specifically, the second organic ligand is a hydrocarbon compound including the second functional group and the functional group to be coordinated with the metal ion. Preferably, the second organic ligand is a dicarboxylic acid derivative including the second functional group. The second organic ligand may be identical to the first organic ligand, except that the second organic ligand includes the second functional group instead of the first functional group. The number of carbon atoms that the second organic ligand has is not particularly limited. It is 3 to 25, for example, and preferably it is 3 to 10. The second organic ligand may include an aromatic ring. It is preferable that, in the second organic ligand, the aromatic ring be composed of a carbon atom. It should be noted that the aromatic ring may be a heteroaromatic ring including a hetero atom such as an oxygen atom, a nitrogen atom, and a sulfur atom. The aromatic ring may be polycyclic, but preferably it is monocyclic. The aromatic ring is a benzene ring, for example.

Preferably, the second organic ligand is a terephthalic acid derivative including the second functional group. The second organic ligand as just mentioned is represented by formula (7) below, for example. In the formula (7), Y is the second functional group.

[Chemical Formula 4]

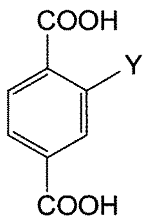

(7)

Specific examples of the second organic ligand include 2-hydroxyterephthalic acid, 2-nitroterephthalic acid, and trimellitic acid.

In the present embodiment, a ratio P2 of the number of moles of the second organic ligand with respect to a total value of the number of moles of the first organic ligand and the number of moles of the second organic ligand is 30 mol% or less, and it is preferably 25 mol% or less, more preferably 20 mol% or less, and still more preferably 15 mol% or less. The ratio P2 is preferably 1 mol% or more, and more preferably 3 mol% or more.

The metal organic framework S is represented by formula (8) below, for example. The formula (8) simply illustrates a UiO-66 derivative composed of the first organic ligand represented by the formula (6), the second organic ligand represented by the formula (7), and a zirconium ion.

[Chemical Formula 5]

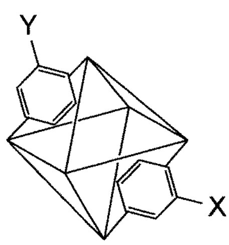

(8)

A method for producing the metal organic framework S includes, for example, allowing a precursor of the metal organic framework S including the metal ion and the first organic ligand to be in contact with the second organic ligand.

The precursor of the metal organic framework S is represented by formula (9) below, for example. The formula (9) simply illustrates a UiO-66 derivative composed of the first organic ligand represented by the formula (6) and a zirconium ion.

[Chemical Formula 6]

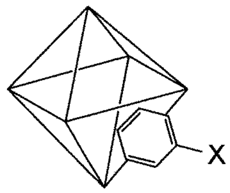

(9)

When the precursor of the metal organic framework S is allowed to be in contact with the second organic ligand, a part of the first organic ligand included in the precursor is replaced with the second organic ligand. Thereby, the metal organic framework S is obtained. A method for producing a metal organic framework by allowing an organic ligand to be replaced in this manner is known as a Post synthetic exchange (PSE) method. According to the PSE method, a part of the first organic ligand, out of the first organic ligand included in the precursor of the metal organic framework S, that is present at a position closer to an outer side of the precursor tends to be replaced with the second organic ligand. Therefore, the first organic ligand and the second organic ligand are present unevenly in the obtained metal organic framework S. Specifically, a content of the first organic ligand in the metal organic framework S tends to decrease gradually from an inner side toward an outer side of the metal organic framework S. In contrast, a content of the second organic ligand in the metal organic framework S tends to increase gradually from the inner side toward the outer side of the metal organic framework S.

The method for allowing the precursor of the metal organic framework S to be in contact with the second organic ligand is not particularly limited. For example, the precursor of the metal organic framework S may be allowed to be in contact with the second organic ligand by being added, together with the second organic ligand, to an organic solvent such as N,N-dimethylformamide (DMF). A concentration of the precursor of the metal organic framework S in the resultant mixed solution is not particularly limited, and it is 0.1 wt% to 20 wt%, for example. A concentration of the second organic ligand in the mixed solution is not particularly limited, and it is 0.1 wt% to 20 wt%, for example. In the state in which the precursor is in contact with the second organic ligand, these may be heated. A heating temperature can be set suitably depending on the precursor and the second organic ligand, and it is 30°C to 150°C, for example. A heating duration is 0.01 hours to 24 hours, for example, and it is preferably 1 hour or less. Particularly, it is preferable to allow the precursor of the metal organic framework S to be in contact with the second organic ligand at a temperature of 40°C or higher and for a duration of 5 minutes or less.

That is, the present invention is, in another aspect, a method for producing the metal organic framework S, wherein

the metal organic framework S includes a metal ion and an organic ligand,
the organic ligand includes, besides a functional group to be coordinated with the metal ion, a first functional group and a second functional group different from the first functional group, and
the second functional group is a hydroxy group, a nitro group, or a carboxyl group,
the method including
allowing a precursor of the metal organic framework S including the metal ion and a first organic ligand including the first functional group to be in contact with a second organic ligand including the second functional group at a temperature of 40°C or higher and for a duration of 5 minutes or less.

The precursor of the metal organic framework S can be produced by a known method. For example, a metal salt and the first organic ligand are dissolved in an organic solvent such as DMF and N,N-dimethylacetamide (DMA). Examples of the metal salt include zirconium chloride, zirconium oxynitrate, and zirconium oxychloride. Next, acid is added to the obtained solution. Examples of the acid include: inorganic acid such as hydrochloric acid; and organic acid such as formic acid and benzoic acid. Next, the resultant solution is placed in an autoclave and is subject to a solvothermal method. Thereby, the precursor of the metal organic framework S is obtained.

The metal organic framework S has, in the separation membrane, particularly in the polyimide, an excellent dispersibility that derives from the second functional group. The dispersibility of the metal organic framework S in the polyimide can be evaluated by, for example, a zeta potential of the metal organic framework S in N, N-dimethylformamide (DMF). The DMF is a compound having a Hansen solubility parameter whose distance from a Hansen solubility parameter of the polyimide is relatively small. Therefore, the metal organic framework S in the DMF tends to exhibit a behavior

similar to a behavior of the metal organic framework S in the polyimide.

The zeta potential of the metal organic framework S in the DMF is a negative value, for example, and it is preferably -1 mV to -15 mV. The zeta potential of the metal organic framework S can be measured with a commercially available zeta potential measuring apparatus. The metal organic framework S having, in the DMF, the zeta potential that is a negative value tends not to be condensed in the polyimide. The metal organic framework S that is inhibited from being condensed in the separation membrane is suitable for increasing a flux of the permeation fluid permeating through the separation membrane.

The metal organic framework S can adsorb water, for example. Particularly, it is preferable that the metal organic framework S adsorb water better than it adsorbs ethanol. A ratio R1 of an adsorption amount Q2 of water adsorbed by the metal organic framework S under water vapor at 25°C and 3.2 kPa with respect to an adsorption amount Q1 of ethanol adsorbed by the metal organic framework S under an ethanol atmosphere at 25°C and 7.4 kPa is 2.0 or more, for example, and it is preferably 3.0 or more. The upper limit of the ratio R1 is not particularly limited, and it is 5.0, for example. In the present description, the "adsorption amount" means a value obtained by converting a volume of a gas adsorbed by 1 g of the metal organic framework S into a volume of the gas in a standard state (298K, 1 atm).

The adsorption amount Q1 of ethanol adsorbed by the metal organic framework S can be determined by the following method. First, the metal organic framework S is pretreated by being heated under a decompressed atmosphere. The pretreatment may be carried out under a vacuum atmosphere. The pretreatment is carried out at a temperature of 100°C or higher, for example. The duration of the pretreatment is not particularly limited, and it is 1 hour or longer, for example. Next, the metal organic framework S is placed in a known vapor adsorption amount measuring apparatus such as BELSORP-maxII available from MicrotracBEL Corp. Next, gaseous ethanol is introduced into the measuring apparatus at a measurement temperature of 25°C. The gaseous ethanol introduced is adsorbed by the metal organic framework S. The gaseous ethanol is introduced until the pressure of the ethanol in the measuring apparatus reaches 7.4 kPa. The pressure of 7.4 kPa is equivalent to an equilibrium vapor pressure (a saturation vapor pressure) of ethanol at 25°C. The adsorption of the ethanol by the metal organic framework S is confirmed to have reached a state of equilibrium, and then the adsorption amount of the ethanol adsorbed by the metal organic framework S is determined. The fact that the adsorption of the ethanol by the metal organic framework S has reached a state of equilibrium can be confirmed by a change in the pressure of the ethanol inside the measuring apparatus. For example, when the change in the pressure of the ethanol inside the measuring apparatus is 40 Pa or less for 500 seconds, the adsorption of the ethanol by the metal organic framework S can be considered to have reached a state of equilibrium. The adsorption amount of the ethanol that is determined by the above-mentioned method can be assumed as the adsorption amount Q1.

The adsorption amount Q2 of water adsorbed by the metal organic framework S can be determined by the following method. First, the metal organic framework S is subject to the pretreatment mentioned above. The metal organic framework S is placed in a vapor adsorption amount measuring apparatus. Next, water vapor is introduced into the measuring apparatus at a measurement temperature of 25°C. The water vapor is introduced until the pressure of the water vapor in the measuring apparatus reaches 3.2 kPa. The pressure of 3.2 kPa is equivalent to an equilibrium vapor pressure of water at 25°C. The adsorption of the water by the metal organic framework S is confirmed to have reached a state of equilibrium, and then the adsorption amount of the water adsorbed by the metal organic framework S is determined. The determined adsorption amount of the water can be assumed as the adsorption amount Q2.

The adsorption amount Q1 of the ethanol adsorbed by the metal organic framework S is 200 $cm^3/g$ or less, for example. The lower limit of the adsorption amount Q1 is not particularly limited. It may be 90 $cm^3/g$ or 100 $cm^3/g$. The adsorption amount Q2 of the water adsorbed by the metal organic framework S is 300 $cm^3/g$ or more, for example, and it may be 350 $cm^3/g$ or more, 450 $cm^3/g$ or more, 500 $cm^3/g$ or more, or 550 $cm^3/g$ or more in some cases. The upper limit of the adsorption amount Q2 is not particularly limited, and it is 800 $cm^3/g$, for example.

The metal organic framework S may be a metal organic framework in which a ratio R2 of a BET (Brunauer-Emmett-Teller) specific surface area S2 obtained by water vapor adsorption with respect to a BET specific surface area S1 obtained by nitrogen gas adsorption is 0.005 or more. In the metal organic framework S, the ratio R2 is 0.01 or more, for example, and it is preferably 0.1 or more, more preferably 0.2 or more, and still more preferably 0.3 or more. The ratio R2 may be 25 or less, 10 or less, 1.0 or less, or 0.6 or less.

In the metal organic framework S, the BET specific surface area S1 obtained by nitrogen gas adsorption is 1500 $m^2/g$ or less, for example, and it is preferably 1000 $m^2/g$ or less. It may be 900 $m^2/g$ or less in some cases. The specific surface area S1 may be 30 $m^2/g$ or more, or 400 $m^2/g$ or more. In the metal organic framework S, the BET specific surface area S2 obtained by water vapor adsorption is 10 $m^2/g$ or more, for example, and it is preferably 100 $m^2/g$ or more, and more preferably 150 $m^2/g$ or more. It may be 200 $m^2/g$ or more in some cases. The specific surface area S2 may be 1000 $m^2/g$ or less, 600 $m^2/g$ or less, or 400 $m^2/g$ or less.

(Embodiment of separation membrane)

As shown in FIG. 1, a separation membrane 10 of the present embodiment is provided with a separation

functional layer 1. The separation functional layer 1 allows, for example, water contained in a liquid mixture to permeate therethrough preferentially or selectively. The separation membrane 10 may be further provided with a porous support member 2 supporting the separation functional layer 1.

The separation functional layer 1 has a filler 3 and a matrix 4, for example. The filler 3 is dispersed in the matrix 4 and is buried in the matrix 4. In the embodiment shown in FIG. 1, all particles of the filler 3 are spaced apart from each other. The filler 3 may be condensed partially.

The filler 3 includes the above-mentioned metal organic framework S, and includes the metal organic framework S as a main component, for example. In the present description, the "main component" means a component having a largest content in the filler 3 on weight basis. A content of the metal organic framework S in the filler 3 is 50 wt% or more, for example, and it is preferably 80 wt% or more, and more preferably 95% or more. The filler 3 is composed substantially of the metal organic framework S, for example. However, the filler 3 may include another component other than the metal organic framework S.

A content of the metal organic framework S in the separation functional layer 1 is 1 wt% or more, for example, and it is preferably 3 wt% or more, and more preferably 5 wt% or more. The content of the metal organic framework S is 30 wt% or less, for example, and it is preferably 10 wt% or less. The separation functional layer 1 in which the content of the metal organic framework S is 10 wt% or less tends to have a high separation performance.

The filler 3 has a shape that is not particularly limited, and it is a particulate shape, for example. In the present description, the "particulate" is a shape such as a spherical shape, an elliptical shape, a flaky shape, and a fibrous shape. The filler 3 has an average particle diameter that is not particularly limited, and it is 5 nm to 10000 nm, for example. The average particle diameter of the filler 3 can be determined by the following method, for example. First, a cross section of the separation functional layer 1 is observed with a transmission electron microscope. On an electron microscope image obtained, an area of a particular particle of the filler 3 is calculated by image processing. A diameter of a circle having an area equal to the calculated area is assumed as a diameter of that particular particle (a diameter of a particle) of the filler 3. A particle diameter of each of an arbitrary number (at least 50) of particles of the filler 3 is calculated. An average of the calculated values is assumed as the average particle diameter of the filler 3.

Preferably, the matrix 4 contains polyimide. As the polyimide contained in the matrix 4, polyimide (P) including a structural unit represented by formula (1) below can be mentioned, for example.

[Chemical Formula 7]

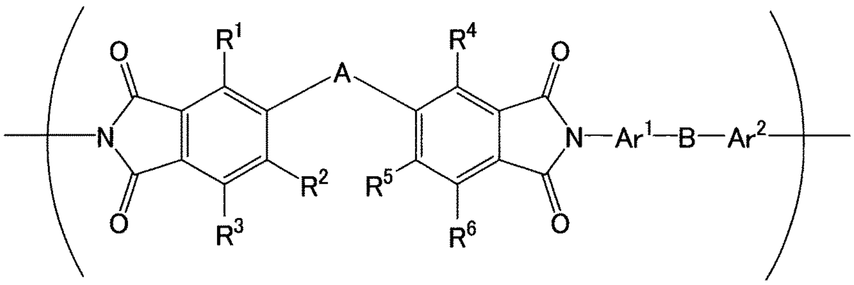

(1)

In the formula (1), A is, for example, a linking group having a solubility parameter, in accordance with a Fedors method, of more than 5.0 $(cal/cm^3)^{1/2}$. In the present description, the "solubility parameter in accordance with a Fedors method" is also referred to as an SP value. The "solubility parameter in accordance with a Fedors method" can be calculated by the following formula. It should be noted that in this formula, δi is the SP value of an atom or atomic group of an i component. Δei is an evaporation energy of the atom or atomic group of the i component. Δvi is a molar volume of the atom or atomic group of the i component.

$$\delta i[(cal/cm^3)^{1/2}] = (\Delta ei/\Delta vi)^{1/2}$$

The detail of the "solubility parameter in accordance with a Fedors method" is disclosed, for example, in "Polymer Engineering and Science" written by Robert F. Fedors, the year 1974, volume no. 14, the second issue, P. 147-154.

When the SP value of A is more than 5.0 $(cal/cm^3)^{1/2}$, water tends to penetrate into the separation functional layer 1 easily. The SP value of A is preferably 8.5 $(cal/cm^3)^{1/2}$ or more, more preferably 11.0 $(cal/cm^3)^{1/2}$ or more, and still more preferably 12.0 $(cal/cm^3)^{1/2}$ or more. The upper limit of the SP value of A is not particularly limited, and it may be 30.0 $(cal/cm^3)^{1/2}$, for example. Preferable examples of the SP value of A include 12.0 $(cal/cm^3)^{1/2}$ and 12.68 $(cal/cm^3)^{1/2}$.

A includes, for example, at least one selected from the group consisting of an oxygen atom, a nitrogen atom, a sulfur atom, and a silicon atom. Preferably, A includes at least one selected from the group consisting of an oxygen atom and a nitrogen atom. Particularly preferably, A includes an oxygen atom. A includes, for example, at least one functional group selected from the group consisting of an ether group, an ester group, a ketone group, a hydroxy group, an amide group, a thioether group, and a sulfonyl group. Preferably, A includes at least one selected from the group consisting of an ether group and an ester group.

A may include another group, such as a hydrocarbon group, besides the above-mentioned functional groups. The number of carbon atoms that the hydrocarbon group has is not particularly limited, and it is 1 to 15, for example. The number of carbon atoms may be 1 to 3, or may be 6 to 15. The valence of the hydrocarbon group is not particularly limited, either. Preferably, the hydrocarbon group is a divalent hydrocarbon group. Examples of the divalent hydrocarbon group include a methylene group, an ethylene group, a propane-1,3-diyl group, a propane-2,2-diyl group, a butane-1,4-diyl group, a pentane-1,5-diyl group, a 2,2-dimethylpropane-1,3-diyl group, a 1,4-phenylene group, a 2,5-di-tert-butyl-1,4-phenylene group, a 1-methyl-1,1-ethanediylbis(1,4-phenylene) group, and a biphenyl-4,4'-diyl group. Furthermore, at least one hydrogen atom included in these hydrocarbon groups may be substituted by a halogen atom.

A is a linking group represented by, for example, a general formula $-O-R^{19}-O-$ or a general formula $-COO-R^{20}-OOC-$. As stated herein, $R^{19}$ and $R^{20}$ each are a divalent hydrocarbon group having 1 to 15 carbon atoms. As the divalent hydrocarbon group, the divalent hydrocarbon groups stated above can be mentioned.

A may not include the above-mentioned functional groups. Examples of such A include an alkylene group. The number of carbon atoms that the alkylene group has is not particularly limited, and it may be 1 to 15, for example, and it may be 1 to 5. The alkylene group may be branched, but preferably it is linear. A part of hydrogen atoms included in the alkylene group may be substituted by a halogen atom. However, it is preferable that the alkylene group be an alkylene group without the substitution, that is, a linear or branched alkylene group.

In the formula (1), the number of atoms constituting a bonding chain, among bonding chains that bond two phthalimide structures linked to each other by A, that is composed of a least number of atoms is 2 or more, for example, and it is preferably 4 or more, and more preferably 6 to 11. In the present description, the bonding chain composed of a least number of atoms is also referred to as a "shortest bonding chain". For example, in the case where A is an o-phenylenegroup, the number of atoms constituting a shortest bonding chain that bonds two phthalimide structures linked to each other by A is 2. In the case where A is a p-phenylene group, the number of atoms constituting a shortest bonding chain that bonds two phthalimide structures linked to each other by A is 4.

A may be one of the linking groups 1 to 26 shown in Tables 1 and 2 below. Tables 1 and 2 show the chemical structure, the SP value, and the number of atoms constituting a shortest bonding chain of each of the linking groups 1 to 26. A is preferably the linking group 11 or the linking group 18, and particularly preferably the linking group 18. In the case where A is the linking group 11 or the linking group 18, the polyimide (P) is easily dissolved in a polar organic solvent, such as N-methyl-2-pyrrolidone (NMP) and 1,3-dioxolane, and is easily adopted in a method desirable for producing the separation functional layer 1.

[Table 1]

| | -A- | SP value $[(cal/cm^3)^{1/2}]$ | The number of atoms constituting shortest bonding chain |
|---|---|---|---|
| 1 | $-CF_2-$ | 6.66 | 1 |
| 2 | $-CHC(CH_3)_3-$ | 7.52 | 1 |
| 3 | $-CH_2-$ | 8.56 | 1 |
| 4 | $-(CH_2)_5-$ | 8.56 | 5 |
| 5 | $-O-CH_2-C(CH_3)_2-CH_2-O-$ | 8.65 | 5 |
| 6 | $-O-(CH_2)_5-O-$ | 9.23 | 7 |
| 7 | $-O-(CH_2)_4-O-$ | 9.37 | 6 |
| 8 | 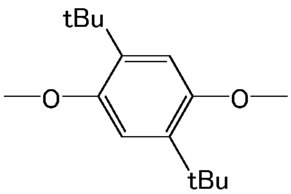 | 9.51 | 6 |

(continued)

| | -A- | SP value $[(cal/cm^3)^{1/2}]$ | The number of atoms constituting shortest bonding chain |
|---|---|---|---|
| 9 | 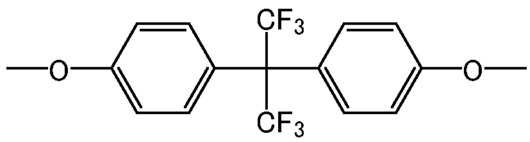 | 9.62 | 11 |
| 10 | $-O-CH_2-O-$ | 10.83 | 3 |
| 11 | 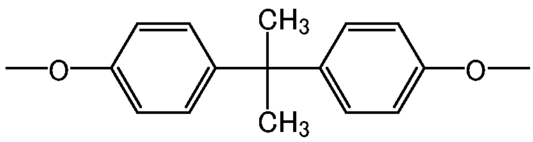 | 11.02 | 11 |
| 12 | 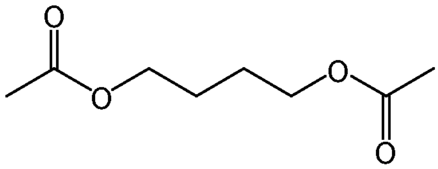 | 11.52 | 8 |
| 13 | 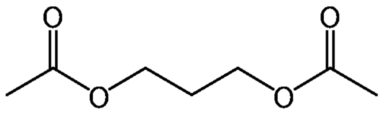 | 12.00 | 7 |
| 14 | 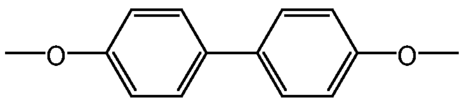 | 12.25 | 10 |
| 15 | 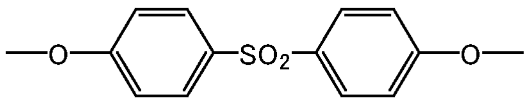 | 12.29 | 11 |

[Table 2]

| | -A- | SP value $[(cal/cm^3)^{1/2}]$ | The number of atoms constituting shortest bonding chain |
|---|---|---|---|
| 16 | 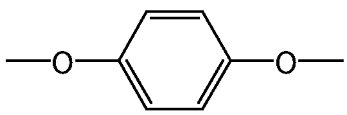 | 12.40 | 6 |
| 17 | $-SO_2-$ | 12.47 | 1 |
| 18 | 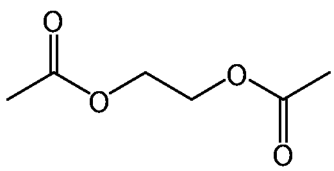 | 12.68 | 6 |

(continued)

| | -A- | SP value [(cal/cm$^3$)$^{1/2}$] | The number of atoms constituting shortest bonding chain |
|---|---|---|---|
| 19 | 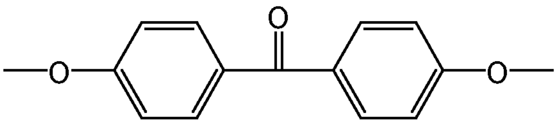 | 13.06 | 11 |
| 20 | 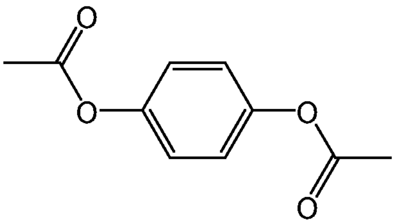 | 13.55 | 8 |
| 21 | -O- | 14.51 | 1 |
| 22 | -S- | 16.79 | 1 |
| 23 | 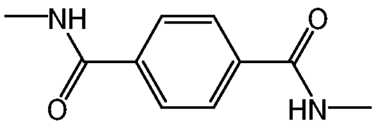 | 18.19 | 8 |
| 24 | -CO- | 19.60 | 1 |
| 25 | 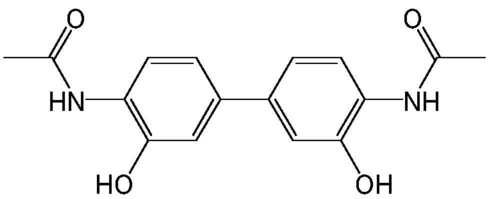 | 20.74 | 12 |
| 26 | -CONH- | 29.02 | 2 |

In the formula (1), B is, for example, a linking group having an SP value more than 8.56 (cal/cm$^3$)$^{1/2}$. Water tends to penetrate into the separation functional layer 1 easily when the SP value of the linking group B is more than 8.56 (cal/cm$^3$)$^{1/2}$. The SP value of B is preferably 9.0 (cal/cm$^3$)$^{1/2}$ or more, more preferably 11.0 (cal/cm$^3$)$^{1/2}$ or more, still more preferably 12.0 (cal/cm$^3$)$^{1/2}$ or more, and particularly preferably 14.0 (cal/cm$^3$)$^{1/2}$ or more. The upper limit of the SP value of B is not particularly limited, and it may be 30.0 (cal/cm$^3$)$^{1/2}$, for example. Preferable examples of the SP value of B include 14.0 (cal/cm$^3$)$^{1/2}$ and 14.51 (cal/cm$^3$)$^{1/2}$.

B includes, for example, at least one selected from the group consisting of an oxygen atom, a nitrogen atom, a sulfur atom, and a silicon atom. Preferably, B includes at least one selected from the group consisting of an oxygen atom and a nitrogen atom. Particularly preferably, B includes an oxygen atom. B includes, for example, at least one functional group selected from the group consisting of an ether group, an ester group, a ketone group, a hydroxy group, an amide group, a thioether group, and a sulfonyl group. Preferably, B includes an ether group.

B may include another group, such as a hydrocarbon group, besides the above-mentioned functional groups. As the hydrocarbon group, the hydrocarbon groups stated above for A can be mentioned. B may be identical to or different from A.

In the formula (1), the number of atoms constituting a bonding chain (a shortest bonding chain), among bonding chains that bond $Ar^1$ and $Ar^2$ linked to each other by B, that is composed of a least number of atoms is 1 or more, for example. The upper limit of the number of atoms constituting the shortest bonding chain is not particularly limited, and it is 12, for example. Preferably, the number of atoms constituting the shortest bonding chain is 1.

B may be one of the linking groups 5 to 26 shown in the above-mentioned Tables 1 and 2. B is preferably the linking group 9, the linking group 16, or the linking group 21, and particularly preferably the linking group 21.

In the formula (1), $R^1$ to $R^6$ each are independently a hydrogen atom, a halogen atom, a hydroxy group, a

sulfonic group, an alkoxy group having 1 to 30 carbon atoms, or a hydrocarbon group having 1 to 30 carbon atoms. Preferably, $R^1$ to $R^6$ each are a hydrogen atom. The alkoxy group or the hydrocarbon group as $R^1$ to $R^6$ may be either linear or branched. The number of carbon atoms that the alkoxy group or the hydrocarbon group has is preferably 1 to 20, more preferably 1 to 10, and particularly preferably 1 to 5. Examples of the alkoxy group include a methoxy group, an ethoxy group, and a propoxy group. Examples of the hydrocarbon group include a methyl group, an ethyl group, and a propyl group. At least one hydrogen atom included in the alkoxy group or the hydrocarbon group may be substituted by a halogen atom.

$R^2$ and $R^3$ as well as $R^5$ and $R^6$ may be bond to each other to form a ring structure. The ring structure is a benzene ring, for example.

In the formula (1), $Ar^1$ and $Ar^2$ each are a divalent aromatic group. The divalent aromatic group includes an aromatic ring. In the formula (1), it is preferable that a nitrogen atom in a phthalimide structure be bonded directly to the aromatic ring included in $Ar^1$, or the aromatic ring included in $Ar^2$. In the formula (1), B may be bonded directly to both of the aromatic ring included in $Ar^1$ and the aromatic ring included in $Ar^2$.

In $Ar^1$ and $Ar^2$, it is preferable that the aromatic ring be composed of a carbon atom. It should be noted that the aromatic ring may be a heteroaromatic ring including a hetero atom such as an oxygen atom, a nitrogen atom, and a sulfur atom. The aromatic ring may be polycyclic, but preferably it is monocyclic. The number of carbon atoms that the aromatic ring has is not particularly limited, and it may be 4 to 14, for example, and it may be 6 to 10. Examples of the aromatic ring include a benzene ring, a naphthalene ring, an anthracene ring, a phenanthrene ring, a furan ring, a pyrrole ring, a pyridine ring, and a thiophene ring.

In $Ar^1$ and $Ar^2$, the aromatic ring may or may not have a substituent. Examples of the substituent of the aromatic ring include a halogen atom, a hydroxy group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. In the case where the aromatic ring has a plurality of substituents, the substituents may be identical to or different from each other.

Preferably, $Ar^1$ and $Ar^2$ each are a phenylene group that may have a substituent, or a naphthalenediyl group that may have a substituent. $Ar^1$ and $Ar^2$ each may be represented by formula (2) below when $Ar^1$ and $Ar^2$ each are a phenylene group that may have a substituent.

[Chemical Formula 8]

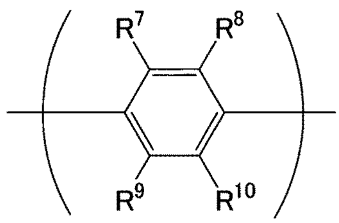

(2)

In the formula (2), $R^7$ to $R^{10}$ each are independently a hydrogen atom, a halogen atom, a hydroxy group, a sulfonic group, an alkoxy group having 1 to 30 carbon atoms, or a hydrocarbon group having 1 to 30 carbon atoms. As the alkoxy group and the hydrocarbon group, the alkoxy groups and the hydrocarbon groups stated above for $R^1$ to $R^6$ can be mentioned. Preferably, $R^7$ to $R^{10}$ each are a hydrogen atom. The formula (2) represents a p-phenylene structure. Polyimide having the p-phenylene structure is less bulky three-dimensionally than polyimide having an o-phenylene structure or an m-phenylene structure, and is suitable for enhancing the separation performance of the separation membrane.

The naphthalenediyl group, as $Ar^1$ and $Ar^2$, that may have a substituent has a naphthalene-2,6-diyl structure, a naphthalene-1,4-diyl structure, a naphthalene-1,5-diyl structure, or a naphthalene-1,8-diyl structure, for example. The naphthalenediyl group that may have a substituent is a naphthalene-2,6-diyl group, for example.

$Ar^1$ and $Ar^2$ may be identical to or different from each other. For example, there may be a case in which $Ar^1$ is a naphthalene-2,6-diyl group while $Ar^2$ is a p-phenylene group.

In the polyimide (P), the structural unit represented by the formula (1) is preferably a structural unit represented by formula (3) below.

[Chemical Formula 9]

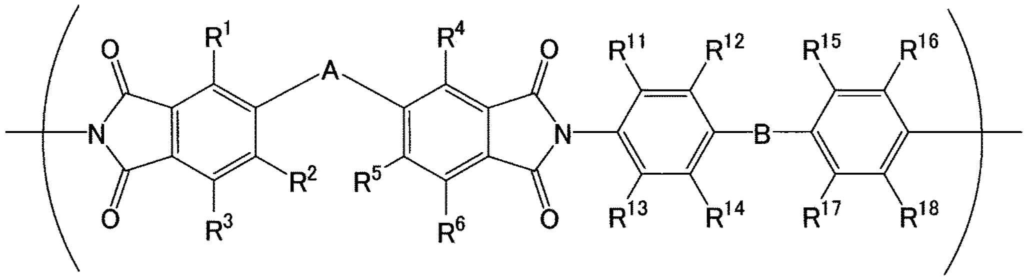

(3)

In the formula (3), A, B, and $R^1$ to $R^6$ are identical to those mentioned above for the formula (1). $R^{11}$ to $R^{18}$ each are independently a hydrogen atom, a halogen atom, a hydroxy group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. $R^{11}$ to $R^{18}$ each are preferably a hydrogen atom.

A content of the structural unit represented by the formula (1) in the polyimide (P) is 50 mol% or more, for example, and it is preferably 60 mol% or more, more preferably 70 mol% or more, still more preferably 80 mol% or more, and particularly preferably 90 mol% or more. The content of the structural unit represented by the formula (1) may be 100 mol%.

The structural unit represented by the formula (1) can be obtained by a reaction between tetracarboxylic dianhydride (C) represented by formula (4) below and a diamine compound (D) represented by formula (5) below. In the formula (4), A as well as $R^1$ to $R^6$ are identical to those in the formula (1). In the formula (5), B, $Ar^1$ and $Ar^2$ are identical to those in the formula (1).

[Chemical Formula 10]

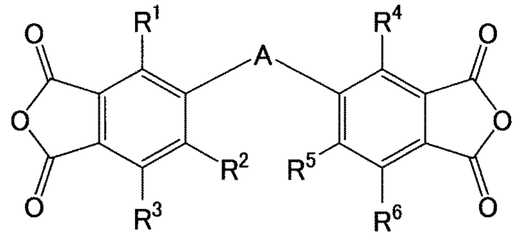

(4)

[Chemical Formula 11]

$$H_2N\text{-}Ar^1\text{-}B\text{-}Ar^2\text{-}NH_2 \qquad (5)$$

The polyimide (P) may include a structural unit derived from an other tetracarboxylic dianhydride that is different from the tetracarboxylic dianhydride (C). The other tetracarboxylic dianhydride is not particularly limited, and a known tetracarboxylic dianhydride can be used. Examples of the other tetracarboxylic dianhydride include pyromellitic dianhydride, and 4,4'-(hexafluoroisopropylidene)diphthalic anhydride.

In the polyimide (P), a ratio p1 of a structural unit(s) derived from the tetracarboxylic dianhydride (C) with respect to structural units derived from all the tetracarboxylic dianhydrides is 50 mol% or more, for example, and it is preferably 70 mol% or more, and more preferably 90 mol% or more. The ratio p1 may be 100 mol%.

The polyimide (P) may include a structural unit derived from an other diamine compound that is different from the diamine compound (D). The other diamine compound is not particularly limited and a known diamine compound can be used. Examples of the other diamine compound include phenylenediamine, diaminobenzoic acid, diaminobiphenyl, and diaminodiphenylmethane. For example, the polyimide (P) may include a structural unit derived from diaminobenzoic acid (such as 3,5-diaminobenzoic acid). The polyimide (P) including the structural unit derived from diaminobenzoic acid is suitable for increasing a flux of the water permeating through the separation membrane 10.

In the polyimide (P), a ratio p2 of a structural unit(s) derived from the diamine compound (D) with respect to structural units derived from all the diamine compounds is 50 mol% or more, for example, and it is preferably 70 mol%

or more, and more preferably 90 mol% or more. The ratio p2 may be 100 mol%.

The polyimide (P) can be produced by the following method, for example. First, the diamine compound (D) is dissolved in a solvent to obtain a solution. Examples of the solvent include a polar organic solvent such as N-methyl-2-pyrrolidone (NMP) and 1,3-dioxolane. Next, the tetracarboxylic dianhydride (C) is added gradually to the obtained solution. This makes the tetracarboxylic dianhydride (C) and the diamine compound (D) react with each other to form polyamide acid. The addition of the tetracarboxylic dianhydride (C) is carried out under the conditions, for example, that the solution is being stirred for 3 to 20 hours at a temperature equal to or lower than a room temperature (25°C).

Subsequently, the polyamide acid is imidized to obtain the polyimide (P). Examples of the imidization method include a chemical imidization method and a thermal imidization method. The chemical imidization method is a method for imidizing polyamide acid using a dehydration condensation agent. The chemical imidization method may be carried out under a room temperature condition or a heat condition. Examples of the dehydration condensation agent include acetic anhydride, pyridine, and triethylamine. The thermal imidization method is a method for imidizing polyamide acid by a heat treatment. The heat treatment is carried out at a temperature of 180°C or higher, for example.

A content of the polyimide (P) in the matrix 4 is 50 wt% or more, for example, and it is preferably 60 wt% or more, more preferably 70 wt% or more, still more preferably 80 wt% or more, and particularly preferably 90 wt% or more. The matrix 4 is composed substantially of the polyimide (P), for example.

A content of the matrix 4 in the separation functional layer 1 is 70 wt% or more, for example. The upper limit of the content of the matrix 4 is not particularly limited, and it may be 99 wt% or 95 wt%.

The separation functional layer 1 has a thickness that is not particularly limited. It is 50 μm or less, for example, and it is preferably 30 μm or less, and more preferably 20 μm or less. The thickness of the separation functional layer 1 may be 1 μm or more, 5 μm or more, or 10 μm or more.

The porous support member 2 is not particularly limited as long as it can support the separation functional layer 1. Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polycarbonate, polysulfone, polyether ether ketone, polyacrylonitrile, polyimide, and polyphenylene oxide; a metallic foam having an open cell or a closed cell; a polymer foam having an open cell or a closed cell; silica; porous glass; and a mesh screen. The porous support member 2 may be a combination of two or more of these materials.

The porous support member 2 has an average pore diameter of 0.01 to 0.4 μm, for example. The porous support member 2 has a thickness that is not particularly limited. It is 10 μm or more, for example, and it is preferably 20 μm or more, and more preferably 50 μm or more. The thickness of the porous support member 2 is 300 μm or less, for example, and it is preferably 200 μm or less, and more preferably 75 μm or less.

The separation membrane 10 can be produced by forming the separation functional layer 1 on the porous support member 2. The separation functional layer 1 can be produced by the following method, for example. First, a coating liquid containing the filler 3 and a material of the matrix 4 is prepared. As a solvent of the coating liquid, an organic solvent, such as 1,3-dioxolane, can be used. The coating liquid may be subject to ultrasonication in order to enhance the dispersibility of the filler 3 in the coating liquid. Next, the coating liquid is applied onto the porous support member 2 to obtain a coating. The coating is dried to form the separation functional layer 1. Thereby, the separation membrane 10 can be produced.

In the case where the matrix 4 contains polyimide, the material of the matrix 4 contained in the coating liquid may be polyamide acid. In this case, the separation functional layer 1 can be formed by imidizing the polyamide acid after applying the coating liquid onto the porous support member 2.

The separation membrane 10 of the present embodiment is used for, for example, separating water from a liquid mixture containing an alcohol and water. In this use, the separation membrane 10 is suitable for increasing a flux of the water permeating through the separation membrane 10. However, the use of the separation membrane 10 is not limited to the above-mentioned use of separating water from a liquid mixture. In the present description, the "flux of water" means a weight of the water permeating through the separation membrane 10 for 1 hour when the separation membrane 10 has an area of 1 $m^2$. For example, when, in a state in which a liquid mixture composed of ethanol and water is in contact with one surface of the separation membrane 10, a space adjacent to an other surface of the separation membrane 10 is decompressed, a flux F of the water permeating through the separation membrane 10 is more than 0.36 $kg/m^2/hr$, for example, and it is preferably 0.40 $kg/m^2/hr$ or more, more preferably 0.45 $kg/m^2/hr$ or more, and still more preferably 0.50 $kg/m^2/hr$ or more. The upper limit of the flux F of the water is not particularly limited, and it is 1.00 $kg/m^2/hr$, for example.

Specifically, the flux F of the water can be measured by the following method. First, in a state in which a liquid mixture composed of ethanol and water is in contact with one surface (a principal surface 11, on a side of the separation functional layer, of the separation membrane 10, for example) of the separation membrane 10, a space adjacent to an other surface (a principal surface 12, on a side of the porous support member, of the separation membrane 10, for

example) of the separation membrane 10 is decompressed. Thereby, a permeation fluid that has permeated through the separation membrane 10 can be obtained. In the above-mentioned procedure, a concentration of the ethanol in the liquid mixture is 50 vol% (44 wt%) when measured with a temperature of the liquid mixture at 20°C. The liquid mixture in contact with the separation membrane 10 has a temperature of 60°C. The space adjacent to the other surface of the separation membrane 10 is decompressed in such a manner that a pressure in the space is lower than an atmospheric pressure in a measurement environment by 100 kPa. Next, a weight of the permeation fluid and a weight ratio of the water in the permeation fluid are measured. The flux F of the water can be determined based on the obtained results.

Under the above-mentioned measurement conditions of the flux F of the water, a separation factor $\alpha$ that the separation membrane 10 has for water with respect to ethanol is 20 or more, for example, and it is preferably 30 or more, more preferably 35 or more, and still more preferably 40 or more. The upper limit of the separation factor $\alpha$ is not particularly limited, and it is 500, for example. The separation membrane 10 having the separation factor $\alpha$ that is 20 or more is sufficiently suitable to be used for separating water from a liquid mixture containing an alcohol and water.

The separation factor $\alpha$ can be calculated by the following formula. It should be noted that in the following formula, $X_A$ and $X_B$ are respectively a volume ratio of the water and a volume ratio of the alcohol in the liquid mixture. $Y_A$ and $Y_B$ are respectively the volume ratio of the water and the volume ratio of the alcohol in the permeation fluid that has permeated through the separation membrane 10.

$$\text{Separation factor } \alpha = (Y_A/Y_B)/(X_A/X_B)$$

The separation membrane 10 of the present embodiment is suitable for increasing a flux of a permeation fluid. Particularly, the separation membrane 10 is suitable for, in the case of separating water from a liquid mixture containing an alcohol and water, increasing a flux of the water permeating through the separation membrane 10. This characteristic derives from the metal organic framework S included in the separation membrane 10.

The metal organic framework S mentioned above can also be used for, in an embodiment other than the separation membrane 10, separating water from a liquid mixture containing an alcohol and water. For example, when the filler 3 mentioned above is added directly to a liquid mixture containing an alcohol and water, the filler 3 adsorbs preferentially or selectively the water contained in the liquid mixture. Thereby, the water can be separated from the liquid mixture. In this manner, the filler 3 including the metal organic framework S can also function as an adsorbent for water. A drying treatment on the filler 3 that has adsorbed water allows the filler 3 to be used repeatedly.

(Embodiment of membrane separation device)

As shown in FIG. 2, a membrane separation device 100 of the present embodiment is provided with the separation membrane 10 and a tank 20. The tank 20 is provided with a first room 21 and a second room 22. The separation membrane 10 is disposed in the tank 20. In the tank 20, the separation membrane 10 separates the first room 21 from the second room 22. The tank 20 has a pair of wall surfaces, and the separation membrane 10 extends from one of them to the other.

The first room 21 has an inlet 21a and an outlet 21b. The second room 22 has an outlet 22a. The inlet 21a, the outlet 21b, and the outlet 22a each are an opening formed in the wall surfaces of the tank 20, for example.

Membrane separation using the membrane separation device 100 is carried out by the following method, for example. First, a liquid mixture 30 containing an alcohol and water is supplied into the first room 21 via the inlet 21a. This makes it possible to bring the liquid mixture 30 into contact with one surface of the separation membrane 10. The alcohol contained in the liquid mixture 30 is, for example, a lower alcohol that exhibits azeotropy with water. The alcohol is preferably ethanol, and it may be isopropyl alcohol (IPA). A concentration of the alcohol in the liquid mixture 30 is 10 wt% or more, for example, and it is preferably 20 wt% or more. The separation membrane 10 is particularly suitable for separating the water from the liquid mixture 30 containing the alcohol at a moderate concentration (20 wt% to 80 wt%, particularly 30 wt% to 70wt%). It should be noted that the concentration of the alcohol in the liquid mixture 30 may be 80 wt% or more. The liquid mixture 30 may be composed substantially of the alcohol and water. A temperature of the liquid mixture 30 may be higher than a boiling point of the alcohol to be used. Preferably, the temperature is lower than the boiling point of the alcohol. The temperature of the liquid mixture 30 is 25°C or higher, for example, and it is preferably 40°C or higher, and more preferably 60°C or higher. The temperature of the liquid mixture 30 may be 75°C or lower.

Next, in a state in which the liquid mixture 30 is in contact with one surface of the separation membrane 10, a space adjacent to an other surface of the separation membrane 10 is decompressed. Specifically, an inside of the second room 22 is decompressed via the outlet 22a. The membrane separation device 100 may be further provided with a pump (not shown) for decompressing the inside of the second room 22. The second room 22 is decompressed in such a manner that a space in the second room 22 has a pressure lower than an atmospheric pressure in a measurement environment by 10 kPa or more, for example, and preferably by 50 kPa or more, and more preferably by 100 kPa or more.

Decompressing the inside of the second room 22 makes it possible to obtain, on a side of the other surface of the separation membrane 10, a permeation fluid 35 having a content of the water higher than a content of the water in the liquid mixture 30. That is, the permeation fluid 35 is supplied into the second room 22. The permeation fluid 35 contains the water as a main component, for example. The permeation fluid 35 may contain a small amount of the alcohol besides the water. The permeation fluid 35 may be a gas or a liquid. The permeation fluid 35 is discharged to an outside of the tank 20 via the outlet 22a.

The concentration of the alcohol in the liquid mixture 30 increases gradually from the inlet 21a toward the outlet 21b of the first room 21. The liquid mixture 30 (a concentrated fluid 36) processed in the first room 21 is discharged to the outside of the tank 20 via the outlet 21b.

The membrane separation device 100 of the present embodiment is used preferably for a pervaporation method. The membrane separation device 100 may be used for other membrane separation methods such as a vapor permeation method. That is, a mixture gas containing a gaseous alcohol and gaseous water may be used instead of the liquid mixture 30 in the membrane separation method mentioned above. The membrane separation device 100 of the present embodiment is suitable for a flow-type (continuous-type) membrane separation method. The membrane separation device 100 of the present embodiment may be used for a batch-type membrane separation method.

(Modification of membrane separation device)

As shown in FIG. 3, a membrane separation device 110 of the present embodiment is provided with a central tube 41 and a laminate 42. The laminate 42 includes the separation membrane 10. The membrane separation device 110 is a spiral membrane element.

The central tube 41 has a cylindrical shape. The central tube 41 has a surface with a plurality of pores formed therein to allow the permeation fluid 35 to flow into the central tube 41. Examples of a material of the central tube 41 include: a resin such as an acrylonitrile-butadiene-styrene copolymer (an ABS resin), a polyphenylene ether resin (a PPE resin), and a polysulfone resin (a PSF resin); and a metal such as stainless steel and titanium. The central tube 41 has an inner diameter in a range of 20 to 100 mm, for example.

The laminate 42 further includes a supply-side flow passage material 43 and a permeation-side flow passage material 44 besides the separation membrane 10. The laminate 42 is wound around a circumference of the central tube 41. The membrane separation device 110 may be further provided with an exterior material (not shown).

As the supply-side flow passage material 43 and the permeation-side flow passage material 44, a resin net composed of polyphenylene sulfide (PPS) or an ethylene-chlorotrifluoroethylene copolymer (ECTFE) can be used, for example.

Membrane separation using the membrane separation device 110 is carried out by the following method, for example. First, the liquid mixture 30 is supplied into an end of the wound laminate 42. An inner space of the central tube 41 is decompressed. Thereby, the permeation fluid 35 that has permeated through the separation membrane 10 of the laminate 42 moves into the central tube 41. The permeation fluid 35 is discharged to an outside via the central tube 41. The liquid mixture 30 (the concentrated fluid 36) processed by the membrane separation device 110 is discharged to the outside from an other end of the wound laminate 42. Thereby, the water can be separated from the liquid mixture 30.

EXAMPLES

Hereinafter, the present invention will be described in detail by way of examples and comparative examples. It should be noted that the present invention is not limited to these examples.

(Example 1)

First, 1.54 g of zirconium chloride ($ZrCl_4$ available from NACALAI TESQUE, INC.) and 1.21 g of 2-aminoterephthalic acid (available from Tokyo Chemical Industry Co., Ltd.) were dissolved in 68.8 mL of DMF (available from NACALAI TESQUE, INC.). To the obtained solution, 0.66 mL of concentrated hydrochloric acid (available from NACALAI TESQUE, INC.) was added and stirred well. Next, the resultant solution was placed in an autoclave (100 mL) and crystallized by a solvothermal method (100°C, 24 h). The produced powder was allowed to cool to a room temperature (25°C ), and then was subject to a separating operation using a centrifuge (6000 rpm). This powder was washed with methanol 3 times to remove an unreacted material from the power. The obtained yellow powder was added to 100 mL of methanol and the mixture was stirred overnight. This powder was separated by using a centrifuge (6000 rpm) and dried at 70°C. Thereby, a metal organic framework (UiO-66(Zr)-$NH_2$) of Example 1 was obtained.

A structure of the metal organic framework of Example 1 was analyzed by a $^1$H-NMR measurement and an X-ray diffraction (XRD) measurement. For the $^1$H-NMR measurement, JNM-ECS400 available from JEOL Ltd. was used. For the XRD measurement, Smart Lab, an automated multipurpose X-ray diffractometer available from Rigaku Corporation, was used.

A zeta potential of the metal organic framework of Example 1 in DMF was measured by the following method. First, 5 mg of the metal organic framework was added to 30 mL of DMF to produce a suspension. The suspension was subject to ultrasonication (20 min) to disperse the metal organic framework evenly in the DMF. This suspension was measured for zeta potential 3 times using a zeta potential and particle diameter measurement system (ELSZ-DN2 available from Otsuka Electronics Co., Ltd.), and an average value thereof was determined as the zeta potential of the metal organic framework in the DMF.

Furthermore, characteristics of a separation membrane including the metal organic framework of Example 1 were evaluated. The separation membrane was produced by the following method. First, as tetracarboxylic dianhydride, bis(1,3-dioxo-1,3-dihydroisobenzofuran-5-carboxylic acid) ethylene (a compound represented by the formula (4) where A was the linking group 18 as well as $R^1$ to $R^6$ each were a hydrogen atom) was prepared. As diamine compounds, 4,4'-diaminodiphenyl ether (a compound represented by the formula (5) where B was the linking group 21 as well as $Ar^1$ and $Ar^2$ each were a p-phenylene group), and 3,5-diaminobenzoic acid were prepared. Next, the diamine compound was dissolved in N-methyl-2-pyrrolidone to obtain a solution. The tetracarboxylic dianhydride was added to the obtained solution under a room temperature condition to obtain polyamide acid. Next, the polyamide acid was chemically imidized using triethylamine and acetic anhydride to obtain polyimide. The chemical imidization was carried out in N-methyl-2-pyrrolidone under a temperature condition of 60°C. In the polyimide, a ratio of structural units derived from 3,5-diaminobenzoic acid with respect to structural units derived from all the diamine compounds was 10 mol%.

Next, the polyimide was dissolved in 1,3-dioxolane to obtain a solution. Next, the polyimide solution was added to a dispersion containing the metal organic framework of Example 1. The obtained mixed solution was applied onto a porous support member to obtain a coating. As the porous support member, a UF membrane (ultrafiltration membrane) RS-50 (a laminate of a PVDF porous layer and a PET nonwoven fabric) available from Nitto Denko Corporation was used. The coating was formed on the PVDF porous layer of the RS-50. Next, the coating was dried to form a separation functional layer. A content of the metal organic framework in the separation functional layer was 5 wt%. Thereby, a separation membrane for characteristics evaluation was obtained.

Next, the separation factor $\alpha$ of the separation membrane and the flux of the water that had permeated through the separation membrane were measured by the following method. First, the separation membrane was placed in a metal cell, and the metal cell was sealed with an O-ring so that no leakage occurred. Next, 250 mL of a liquid mixture was injected into the metal cell in such a manner that the liquid mixture was in contact with a principal surface, on a side of the separation functional layer, of the separation membrane. The liquid mixture was composed substantially of ethanol and water. A concentration of the ethanol in the liquid mixture was 50 vol% when measured with a temperature of the liquid mixture at 20°C. Next, the metal cell was heated to 60°C in a water bath. The temperature of the liquid mixture in the metal cell was confirmed to be 60°C, and then a space, in the metal cell, that is adjacent to a principal surface, on a side of the porous support member, of the separation membrane was decompressed. This space was decompressed in such a manner that a pressure in the space was lower than an atmospheric pressure in a measurement environment by 100 kPa. Thereby, a gaseous permeation fluid was obtained. The gaseous permeation fluid was cooled using -196°C liquid nitrogen to liquefy the permeation fluid. A composition of the liquid permeation fluid was analyzed by gas chromatography. The separation factor $\alpha$ of the separation membrane and the flux F of the water that had permeated through the separation membrane were calculated based on the composition of the permeation fluid, a weight of the permeation fluid, etc.

(Example 2)

To 33 mL of DMF, 0.5 g of the metal organic framework (UiO-66(Zr)-$NH_2$) of Example 1 and 0.5 g of 2-hydroxyterephthalic acid (available from Tokyo Chemical Industry Co., Ltd.) were added and stirred for 10 minutes at a room temperature. The obtained suspension was heated to 120°C and stirred for 5 minutes (0.08 hours). The suspension was allowed to cool to a room temperature, and then powder in the suspension was collected by using a centrifuge (6000 rpm). The obtained yellow powder was added to 100 mL of methanol and the mixture was stirred overnight. Powder was collected by using a centrifuge (6000 rpm) and dried at 70°C. Thereby, a metal organic framework (UiO-66(Zr)-$NH_2$,OH) of Example 2 was obtained. With the metal organic framework of Example 2, the structure analysis, the zeta potential measurement in the DMF, and the characteristics evaluation on the separation membrane were carried out in the same manner as in Example 1. Furthermore, based on the result of the $^1$H-NMR measurement of the metal organic framework, the ratio P1 of the number of moles of the second functional group (a hydroxy group) with respect to the total value of the number of moles of the first functional group (an amino group) and the number of moles of the second functional group in the metal organic framework was calculated.

(Example 3)

Characteristics evaluation on the separation membrane was carried out in the same manner as in Example 2, except that the content of the metal organic framework in the separation functional layer was changed to 10 wt%.

(Example 4)

To 33 mL of DMF, 0.5 g of the metal organic framework (UiO-66(Zr)-$NH_2$) of Example 1 and 1.68 g of 2-nitroterephthalic acid (available from Tokyo Chemical Industry Co., Ltd.) were added and stirred for 10 minutes at a room temperature. The obtained suspension was heated to 120°C and stirred for 5 minutes (0.08 hours). The suspension was allowed to cool to a room temperature, and then powder in the suspension was collected by using a centrifuge (6000 rpm). The obtained yellow powder was added to 100 mL of methanol and the mixture was stirred overnight. Powder was collected by using a centrifuge (6000 rpm) and dried at 70°C. Thereby, a metal organic framework (UiO-66(Zr)-NH2,$NO_2$) of Example 4 was obtained. With the metal organic framework of Example 4, the structure analysis, the zeta potential measurement in the DMF, and the characteristics evaluation on the separation membrane were carried out in the same manner as in Example 1. Furthermore, based on the result of the $^1$H-NMR measurement of the metal organic framework, the ratio P1 of the number of moles of the second functional group (a nitro group) with respect to the total value of the number of moles of the first functional group (an amino group) and the number of moles of the second functional group in the metal organic framework was calculated.

(Example 5)

To 33 mL of DMF, 0.5 g of the metal organic framework (UiO-66(Zr)-$NH_2$) of Example 1 and 0.58 g of trimellitic acid (available from NACALAI TESQUE, INC.) were added and stirred for 10 minutes at a room temperature. The obtained suspension was heated to 120°C and stirred for 5 minutes (0.08 hours). The suspension was allowed to cool to a room temperature, and then powder in the suspension was collected by using a centrifuge (6000 rpm). The obtained yellow powder was added to 100 mL of methanol and the mixture was stirred overnight. Powder was collected by using a centrifuge (6000 rpm) and dried at 70°C. Thereby, a metal organic framework (UiO-66(Zr)-$NH_2$,COOH) of Example 5 was obtained. With the metal organic framework of Example 5, the structure analysis, the zeta potential measurement in the DMF, and the characteristics evaluation on the separation membrane were carried out in the same manner as in Example 1. Furthermore, based on the result of the $^1$H-NMR measurement of the metal organic framework, the ratio P1 of the number of moles of the second functional group (a carboxyl group) with respect to the total value of the number of moles of the first functional group (an amino group) and the number of moles of the second functional group in the metal organic framework was calculated.

(Example 6)

A metal organic framework (UiO-66(Zr)-$NH_2$,COOH) of Example 6 was obtained in the same manner as in Example 5, except that the suspension heated to 120°C was stirred for 24 hours. With the metal organic framework of Example 6, the structure analysis and the characteristics evaluation on the separation membrane were carried out in the same manner as in Example 1. Furthermore, based on the result of the $^1$H-NMR measurement of the metal organic framework, the ratio P1 of the number of moles of the second functional group (a carboxyl group) with respect to the total value of the number of moles of the first functional group (an amino group) and the number of moles of the second functional group in the metal organic framework was calculated.

(Example 7)

First, 1.80 g of zirconium oxynitrate ($ZrO(NO_3)_2 \cdot 2H_2O$ available from NACALAI TESQUE, INC.) and 3.27 g of trimellitic acid were added to a mixed solution composed of 54 mL of DMF and 36.4g of benzoic acid, and these were dissolved by being stirred. Next, the resultant solution was placed in an autoclave (100 mL) and crystallized by a solvothermal method (150°C, 24 h). The produced powder was allowed to cool to a room temperature, and then was subject to a separating operation using a centrifuge (6000 rpm). This powder was washed with methanol 3 times to remove an unreacted material from the power. The obtained powder was collected by using a centrifuge (6000 rpm) and added to 40 mL of methanol, and the mixture was stirred overnight. This powder was separated by using a centrifuge (6000 rpm) and dried at 70°C. Thereby, a metal organic framework (UiO-66(Zr)-COOH) of Example 7 was obtained. With the metal organic framework of Example 7, the structure analysis, the zeta potential measurement in the DMF, and the characteristics evaluation on the separation membrane were carried out in the same manner as in Example 1.

(Example 8)

To 33 mL of DMF, 0.5 g of the metal organic framework (UiO-66(Zr)-$NH_2$) of Example 1 and 1.25 g of terephthalic acid (available from NACALAI TESQUE, INC.) were added and stirred for 10 minutes at a room temperature. The obtained suspension was heated to 120°C and stirred for 5 minutes (0.08 hours). The suspension was allowed to cool to a room temperature, and then powder in the suspension was collected by using a centrifuge (6000 rpm). The obtained yellow powder was added to 100 mL of methanol and the mixture was stirred overnight. Powder was collected by using a centrifuge (6000 rpm) and dried at 70°C. Thereby, a metal organic framework (UiO-66(Zr)-$NH_2$,H) of Example 8 was obtained. With the metal organic framework of Example 8, the structure analysis, the zeta potential measurement in the DMF, and the characteristics evaluation on the separation membrane were carried out in the same manner as in Example 1. Furthermore, based on the result of the $^1$H-NMR measurement of the metal organic framework, the ratio of the number of moles of terephthalic acid with respect to the total value of the number of moles of 2-aminoterephthalic acid and the number of moles of the terephthalic acid in the metal organic framework was calculated.

[Table 3]

| | Metal organic framework | | | | | | Evaluation on separation membrane | | |
|---|---|---|---|---|---|---|---|---|---|
| | Type | First functional group | Second functional group | Duration of Modification (h)*1 | Ratio P1 (mol%) 2 | Zeta potential in DMF (mV) | Content of metal organic framework (wt%) | Separation factor α | Flux F of water (kg/$m^2$/hr) |
| Example 1 | UiO-66 -$NH_2$ | -$NH_2$ | - | - | - | 5.0 | 5 | 47.3 | 0.36 |
| Example 2 | UiO-66 -$NH_2$,OH | -$NH_2$ | -OH | 0.08 | 6.8 | -3.0 | 5 | 37.5 | 0.41 |
| Example 3 | UiO-66 -$NH_2$,OH | -$NH_2$ | -OH | 0.08 | 6.8 | -3.0 | 10 | 47.5 | 0.48 |
| Example 4 | UiO-66 -NHz,NOz | -$NH_2$ | -$NO_2$ | 0.08 | 5.0 | -2.0 | 5 | 34.2 | 0.45 |
| Example 5 | UiO-66 -$NH_2$,COOH | -$NH_2$ | -COOH | 0.08 | 12.6 | -8.0 | 5 | 42.2 | 0.54 |
| Example 6 | UiO-66 -$NH_2$,COOH | -$NH_2$ | -COOH | 24 | 46.7 | - | 5 | 34.7 | 0.30 |
| Example 7 | UiO-66 -COOH | - | -COOH | - | - | -37.0 | 5 | 48.8 | 0.29 |
| Example 8 | UiO-66 -$NH_2$,H | -$NH_2$ | - | 0.08 | 11.1 (*3) | 18.0 | 5 | 51.0 | 0.23 |

(*1) The duration for which the heated suspension was stirred according to the PSE method.
(*2) The ratio of the number of moles of the second functional group with respect to the total value of the number of moles of the first functional group and the number of moles of the second functional group in the metal organic framework.
(*3) The number of moles of 2-aminoterephthalic acid and the number of moles of terephthalic acid in the metal organic framework.

As shown in Table 3, the metal organic frameworks of Examples 2 to 5 that included the second functional group (a hydroxy group, a nitro group, or a carboxyl group) and that had the ratio P1 adjusted to 30 mol% or less were more suitable for increasing the flux F of the permeation fluid (water) permeating through the separation membrane than the other metal organic frameworks. Each of the separation membranes of Examples 2 to 5 had the separation factor $\alpha$ that was 20 or more, which was a practically sufficient value. In each of Examples 1 to 8, the separation functional layer in the separation membrane for characteristics evaluation had a uniformed thickness of 1 to 1.5 $\mu$m. In the case of producing a separation membrane for characteristics evaluation without adding the metal organic framework, the separation factor $\alpha$ of the separation membrane was 66.6 and the flux F of the water was 0.21 kg/m$^2$/hr.

INDUSTRIAL APPLICABILITY

The metal organic framework of the present embodiment is suitable for a filler of a separation membrane. The separation membrane is useful for separating water from a liquid mixture containing an alcohol and water, particularly for refining bioethanol.

**Claims**

**1.** A metal organic framework comprising a metal ion and an organic ligand, wherein

the organic ligand includes, besides a functional group to be coordinated with the metal ion, a first functional group and a second functional group different from the first functional group,
the second functional group is a hydroxy group, a nitro group, or a carboxyl group, and
a ratio of a number of moles of the second functional group with respect to a total value of a number of moles of the first functional group and the number of moles of the second functional group is 30 mol% or less.

**2.** The metal organic framework according to claim 1, wherein the organic ligand includes a first organic ligand including the first functional group and a second organic ligand including the second functional group.

**3.** The metal organic framework according to claim 1 or 2, wherein the first functional group is an amino group.

**4.** The metal organic framework according to any one of claims 1 to 3, wherein the organic ligand includes a dicarboxylic acid derivative.

**5.** The metal organic framework according to any one of claims 1 to 4, wherein the organic ligand includes a terephthalic acid derivative.

**6.** The metal organic framework according to any one of claims 1 to 5, wherein the metal ion includes zirconium.

**7.** The metal organic framework according to any one of claims 1 to 6, wherein a zeta potential of the metal organic framework in N,N-dimethylformamide is a negative value.

**8.** A separation membrane comprising the metal organic framework according to any one of claims 1 to 7.

**9.** The separation membrane according to claim 8, wherein the separation membrane is provided with a separation functional layer including a matrix and the metal organic framework dispersed in the matrix.

**10.** The separation membrane according to claim 9, wherein the matrix contains polyimide.

**11.** The separation membrane according to claim 10, wherein the polyimide includes a structural unit represented by formula (1) below:

[Chemical Formula 1]

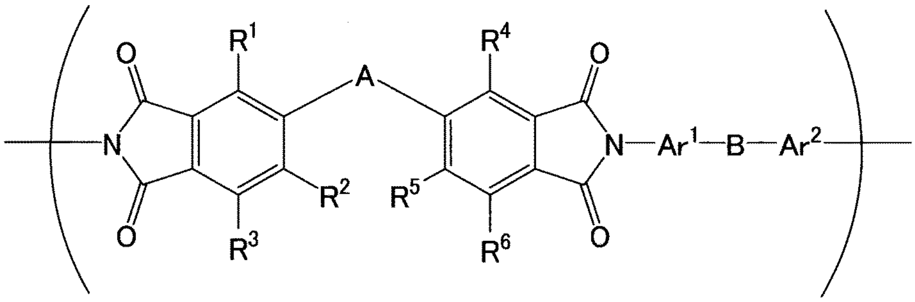

(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxy group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

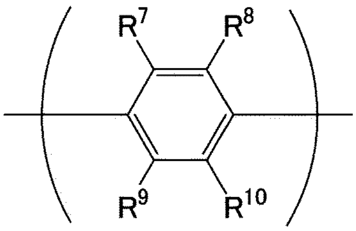

(2)

where $R^7$ to $R^{10}$ each are independently a hydrogen atom, a halogen atom, a hydroxy group, a sulfonic group, an alkoxy group having 1 to 30 carbon atoms, or a hydrocarbon group having 1 to 30 carbon atoms.

**12.** The separation membrane according to any one of claims 9 to 11, wherein a content of the metal organic framework in the separation functional layer is 10 wt% or less.

**13.** The separation membrane according to any one of claims 8 to 12, wherein the separation membrane is used for separating water from a liquid mixture containing an alcohol and water.

**14.** A method for producing the metal organic framework according to any one of claims 1 to 7, comprising
allowing a precursor of the metal organic framework including the metal ion and a first organic ligand including the first functional group to be in contact with a second organic ligand including the second functional group.

**15.** A method for producing a metal organic framework, wherein

the metal organic framework includes a metal ion and an organic ligand,
the organic ligand includes, besides a functional group to be coordinated with the metal ion, a first functional group and a second functional group different from the first functional group, and
the second functional group is a hydroxy group, a nitro group, or a carboxyl group,
the method comprising
allowing a precursor of the metal organic framework including the metal ion and a first organic ligand including the first functional group to be in contact with a second organic ligand including the second functional group at a temperature of 40°C or higher and for a duration of 5 minutes or less.

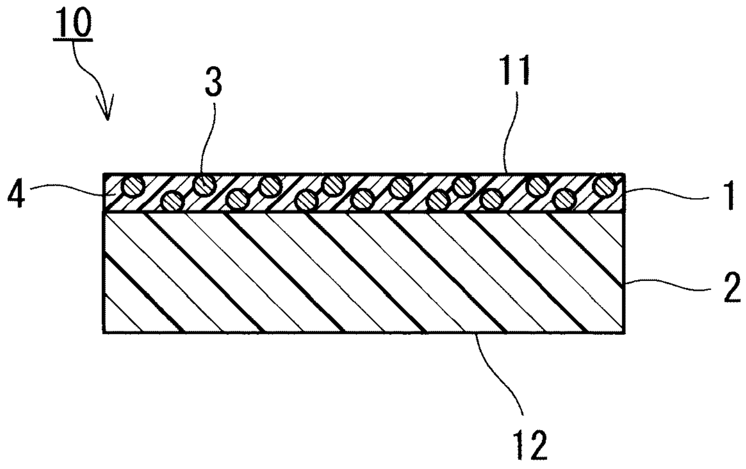


FIG.1

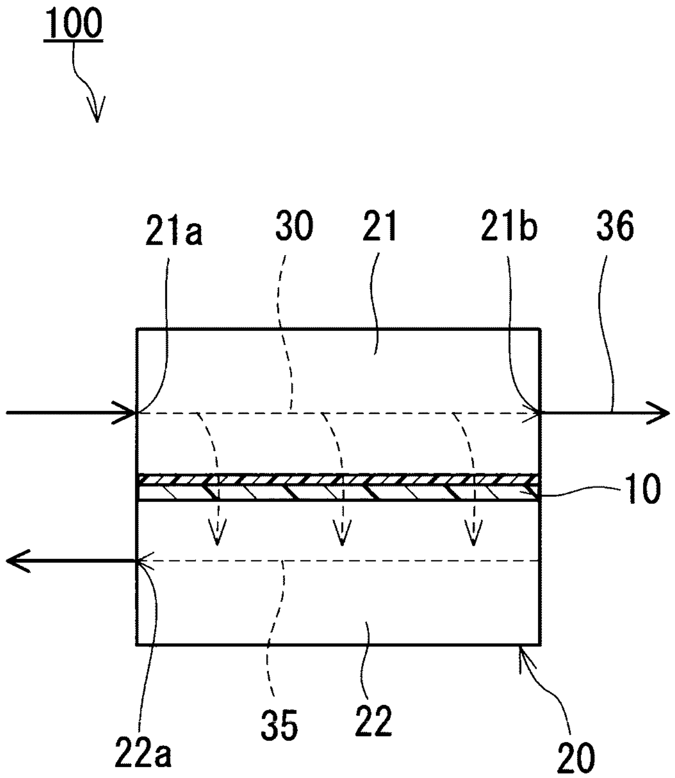


FIG.2

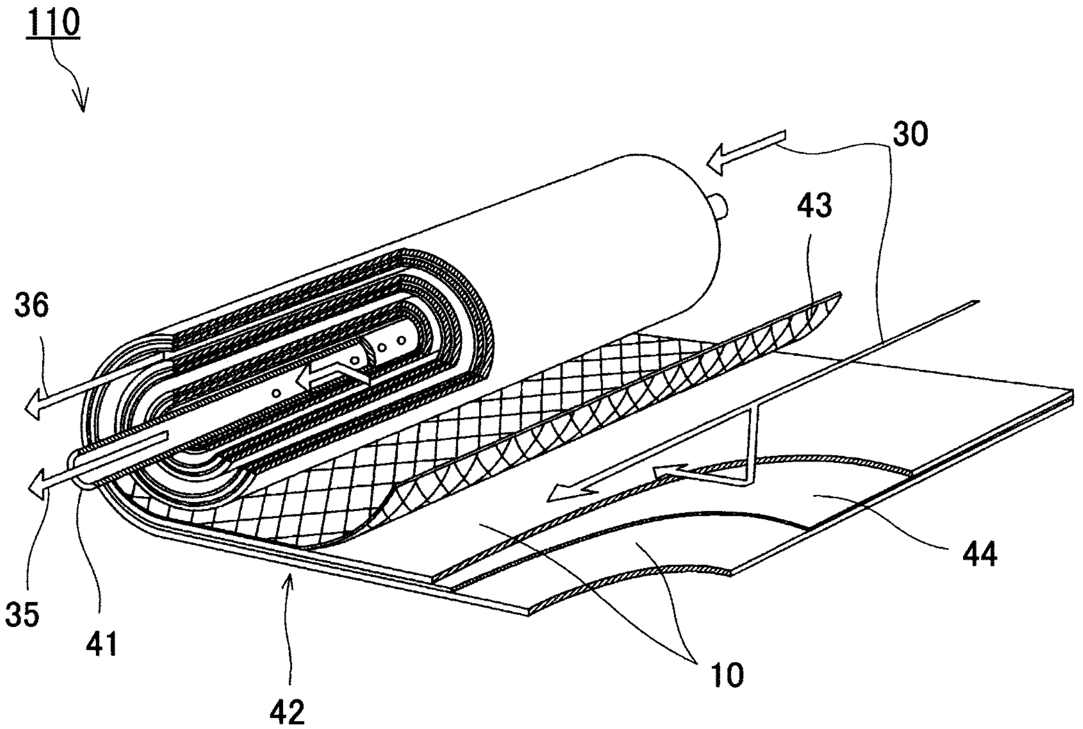


FIG.3

**INTERNATIONAL SEARCH REPORT**

International application No. PCT/JP2021/006895

A. CLASSIFICATION OF SUBJECT MATTER
Int. Cl. G07F7/00(2006.01)i, B01D61/36(2006.01)i, B01D71/06(2006.01)i, B01D71/64(2006.01)i
FI: C07F7/00 A, B01D61/36, B01D71/64, B01D71/06
According to International Patent Classification (IPC) or to both national classification and IPC

B. FIELDS SEARCHED
Minimum documentation searched (classification system followed by classification symbols)
Int. Cl. C07F7/00, B01D61/36, B01D71/06, B01D71/64

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
JSTPlus/JMEDPlus/JST7580 (JDreamIII); CAplus/MEDLINE/EMBASE/BIOSIS(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | RADA, Z. H. et al. Effects of -NO2 and-NH2 functional groups in mixed-linker Zr-based MOFs on gas adsorption of CO2 and CH4, Progress in Natural Science: Materials International, 2018, vol. 28, no. 2, pp. 160-167, abstract, 2. Experimental section, fig. 7, table S1 | 1-7<br>8-12, 14, 15<br>13 |
| Y<br>A | TANH JEAZET, H. B. et al. Metal-organic frameworks in mixed-matrix membranes for gas separation, Dalton Trans, 2012, vol. 41, no. 46, pp. 14003-14027, abstract, Glossary for membrane specific terms | 8-12<br>13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05.04.2021 | 20.04.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2021/006895

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | TADDEI, M. et al. Post-Synthetic Ligand Exchange in Zirconium-Based Metal-Organic Frameworks: Beware of The Defects!, Angew Chem. Int. Ed. Engl., 2018, vol. 57, no. 36, pp. 11706-11710, p. 11706, left column, second paragraph, p. 11708, left column, second paragraph | 14, 15<br>13 |
| X<br>Y<br>A | RADA, Z. H. et al. Bifunctionalized Metal Organic Frameworks, UiO-66-N02-N (N= -NH2, -(OH)2, -(COOH)2), for Enhanced Adsorption and Selectivity of CO2 and N2, J. Chem. Eng. Data, 2015, vol. 60, no. 7, pp. 2152-2161, abstract, 2. Experimental section, fig. 4 | 1, 2, 4-7<br>8-12, 14, 15<br>13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011501739 A


### Non-patent literature cited in the description


- **ROBERT F. FEDORS.** *Polymer Engineering and Science,* 1974, vol. 14, 147-154